# EUROPÄISCHE PATENTSCHRIFT

(11) **EP 0 822 235 B1**
(45) Veröffentlichungstag und Bekanntmachung des Hinweises auf die Patenterteilung: **30.01.2002**
(21) Anmeldenummer: 97810515.3
(22) Anmeldetag: 22.07.1997
(51) Int. Cl.: C09B 67/22, C09B 43/38, C08K 5/23

(54) **Verfahren zur Herstellung von farbstarken Disazopigmentgemischen**
Process for the manufacture of disazo pigment mixtures with a high tinctorial power
Procédé de préparation de mélanges de pigments disazoiques à haut pouvoir tinctorial

(30) Priorität: 31.07.1996 CH 190796
(43) Veröffentlichungstag der Anmeldung: 04.02.1998
(73) Patentinhaber: Ciba Specialty Chemicals Holding Inc., 4057 Basel (CH)
(72) Erfinder: Medinger, Bernhard, 1735 Giffers (CH); Andrey, Daniel, 1618 Châtel-St-Denis (CH)

(56) Entgegenhaltungen:
- FR-A- 2 376 190
- CHEMICAL ABSTRACTS, vol. 83, no. 2, 14.Juli 1975 Columbus, Ohio, US; abstract no. 12161e, F. MUZIK: "condensation azo pigments" Seite 95; Spalte 2; XP002069910 & CZ 154 505 A
- DATABASE WPI Week 7725 Derwent Publications Ltd., London, GB; AN 77-35332y[25] XP002069911 NIPPON KAYAKU: "Heatresistant Colouring of Organic Polymers" & JP 52 043 848 (NIPPON KAYAKU KK) , 6.April 1977 & JP 52 043 848 A

## Beschreibung

Die vorliegende Erfindung betrifft ein Verfahren zur Herstellung von farbstarken Disazopigmentgemischen durch Kondensation von 2 Mol eines Azocarbonsäurechlorids mit 1 Mol eines Gemisches von 2 oder 3 verschiedenen Phenylendiaminen. Die erhaltenen Produkte zeichnen sich durch ausserordentliche Farbstärke und/oder Sättigung aus.

Aus GB 1 595 489 ist bekannt, dass durch Kondensation von 2 Mol eines Gemisches verschiedener Azocarbonsäurechloride der allgemeinen Formel 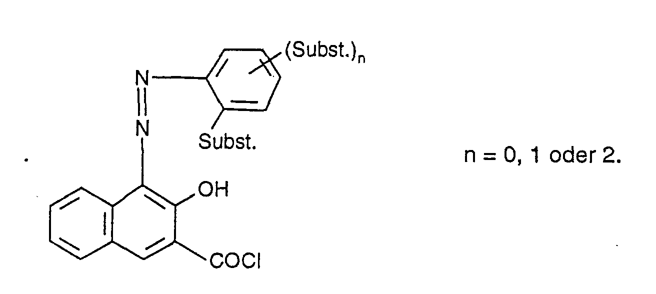 mit 1 Mol eines Diamins der Formel

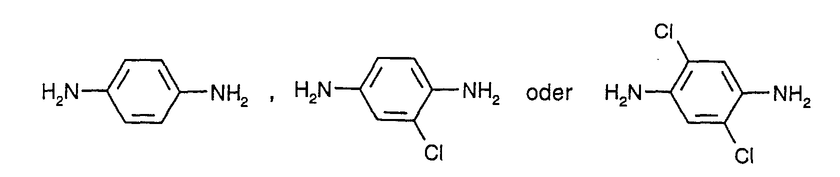

Disazopigmentgemische mit guten coloristischen Eigenschaften erhalten werden. Auf Seite 8, Zeilen 8 und 9 wird festgehalten, dass anstelle einheitlicher Diamine auch Gemische verschiedener Diamine verwendet werden können, ohne dass dadurch ein überraschender Effekt erzielt wird.

Entgegen dieser Aussage ist nun ganz überraschend gefunden worden, dass ausgehend vom einheitlichen Azocarbonsäurechlorid der Formel 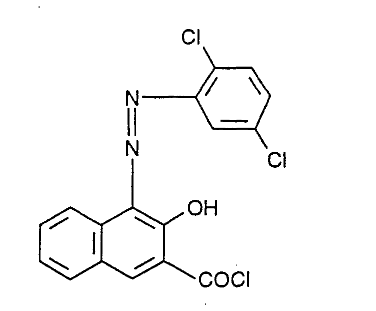 mit einem Gemisch von 2 oder 3 Diaminen der Formeln 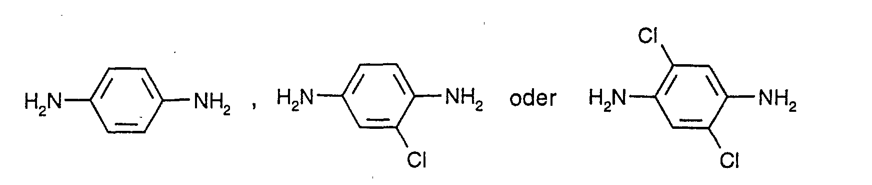 in bestimmten Mischungsverhältnissen Disazopigmentgemische erhalten werden können, die sich durch unerwartet verbesserte Farbstärke und/oder Sättigung im Vergleich zu entsprechenden Einzelverbindungen oder von physikalischen Gemischen von Einzelverbindungen auszeichnen.

Die vorliegende Erfindung betrifft demnach ein Verfahren zur Herstellung von Disazopigmentgemischen, dadurch gekennzeichnet, dass 2 Mol eines Azocarbonsäurechlorids der Formel 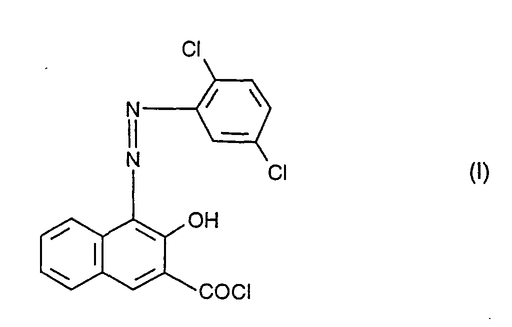 mit 1 Mol eines Gemisches von Diaminen der Formeln 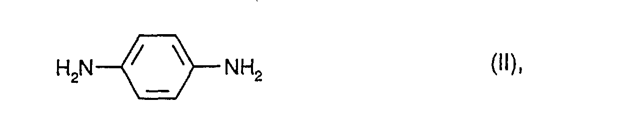 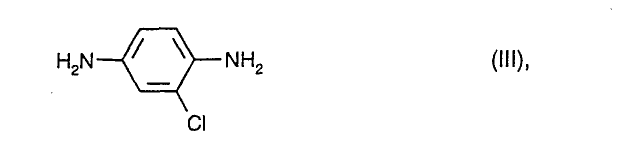 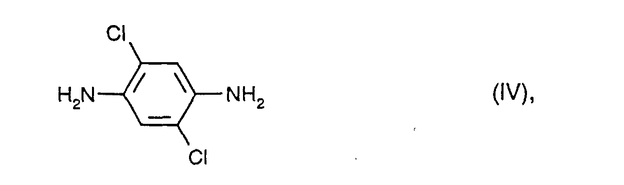 im Molverhältnis
II : III : IV von 0-30 : 5-60 : 40-95
   kondensiert werden, wobei die Kondensation und die Isolierung des erhaltenen Produktes nach allgemein üblichen Methoden erfolgt.
Besonders interessante Produkte erhält man mit einem Diamingemisch im Molverhältnis
II : III : IV von 0-25 : 5-50 : 50-90
   bevorzugt mit einem Diamingemisch im Molverhältnis
II: III: IV von 5-15: 8-30: 70-87
   und insbesondere mit einem Diamingemisch im Molverhältnis
II : III : IV von 10: 10: 80.

Das Azocarbonsäurechlorid der Formel I sowie die Diamine der Formeln II, III und IV sind bekannte Substanzen (z.B. aus GB 1 595 489).

Die Kondensation erfolgt, wie bereits erwähnt, nach allgemein üblichen Methoden, wie sie u.a. beispielsweise auch in GB 1 595 489 beschrieben sind.

Setzt man die 3 Diamine der Formeln II, III und IV im Molverhältnis
II : III : IV von 25 : 25 : 50
   ein, so erhält man eine feste Lösung bestehend aus den Disazopigmenten der Formeln 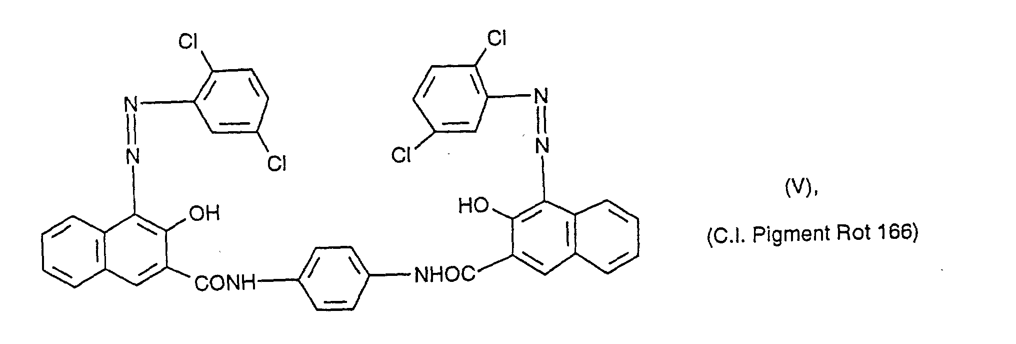 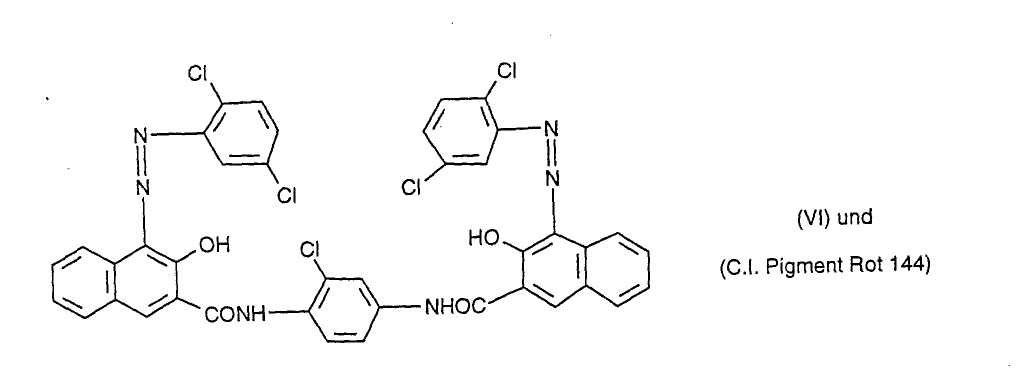 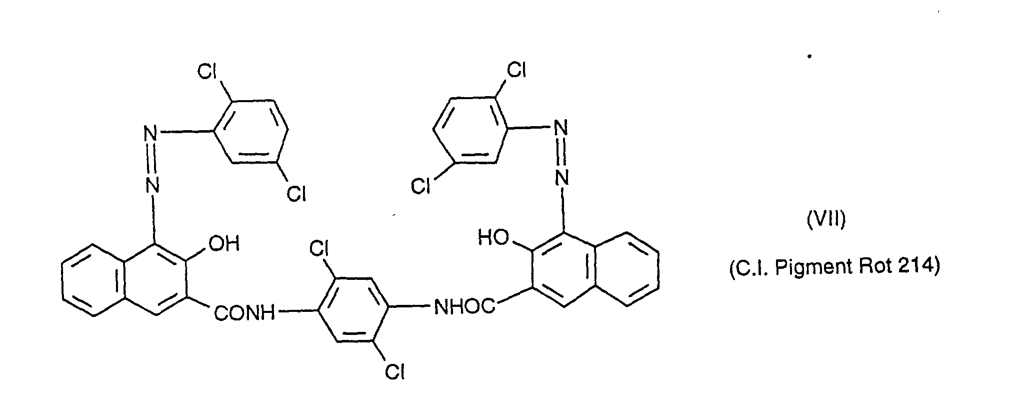 im Molverhältnis V : VI : VII von 25 : 25 : 50.

Diese feste Lösung ist neu und stellt einen weiteren Gegenstand der vorliegenden Erfindung dar.

Eine feste Lösung ist durch ihre Röntgenbeugungsdiagramme charakterisiert, wobei sich die Röntgenbeugungsdiagramme der festen Lösung von den Röntgenbeugungsdiagrammen der Einzelkomponenten und des physikalischen Gemisches der Einzelkomponenten unterscheiden.

Die nach dem erfindungsgemässen Verfahren erhaltenen Mischkondensate, darunter auch die erfindungsgemässe feste Lösung, stellen wertvolle Pigmente zum Färben von hochmolekularem organischem Material dar.

Hochmolekulare organische Materialien, die mit den erfindungsgemäss erhaltenen Pigmenten gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäss hergestellten Pigmente als Toner oder in Form von Präparaten einzusetzen.

Bezogen auf das zu pigmentierende hochmolekulare organische Material kann man die erfindungsgemäss hergestellten Pigmente in einer Menge von 0,01 bis 30 Gew.%, vorzugsweise von 0,1 bis 10 Gew. %, einsetzen.

Die Pigmentierung der hochmolekularen organischen Substanzen mit den erfindungsgemäss hergestellten Pigmenten erfolgt beispielsweise derart, dass man solche Pigmente gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbin dungen vor der Verformung sogenannte Weich macher einzuverleiben. Als solche können z.B. Ester der Phosphorsäure, Phthalsäure oder Sebacinsäure dienen. Die Weichmacher können vor oder nach der Einverleibung der erfindungsgemäss hergestellten Pigmente in die Polymeren eingearbeitet werden. Zwecks Erzielung verschiedener Farbtöne ist es ferner möglich, den hochmolekularen organi schen Stoffen neben den erfindungsgemäss hergestellten Pigmenten noch Füllstoffe bzw. andere farbgebende Bestandteile, wie Weiss-, Bunt- oder Schwarzpigmente, in belie bigen Mengen zuzufügen.

Zum Pigmentieren von Lacken, Anstrichstoffen und Druckfarben werden die hoch molekularen organischen Materialien und die erfindungsgemäss hergestellten Pigmente gege benenfalls zusammen mit Zusatzstoffen, wie Füllmitteln, anderen Pigmenten, Siccativen oder Weichmachern, in einem gemeinsamen organischen Lösungs mittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Besonders geeignet sind die erfindungsgemäss hergestellten Pigmente zum Einfärben von Kunststoffen, bevorzugt Polyolefinen und insbesondere von Polypropylenfasern.

In Färbungen, beispielsweise von Polyvinylchlorid oder Polyolefinen, zeichnen sich die Pigmente, die nach dem erfindungsgemässen Verfahren hergestellt werden, durch gute allgemeine Pigmenteigenschaften, wie gute Dispergierbarkeit, gute Migrations-, Hitze-, Licht- und Wetterbeständigkeit sowie gute Deckkraft aber insbesondere durch sehr hohe Farbstärke und Reinheit aus.

Die nachfolgenden Beispiele erläutern die Erfindung.

Beispiel 1a): 72,2 g eines nach üblichen Methoden durch Kupplung von diazotiertem 1-Amino-2,5-dichlorbenzol mit 2,3-Hydroxynaphthoesäure erhaltenen Azofarbstoffes werden in feiner Verteilung im Gemisch mit 520 g o-Dichlorbenzol unter Rühren auf 85°C erwärmt. Anschliessend lässt man, im Verlauf von 10 Minuten bei 80-90°C, 32,7 g Thionylchlorid zutropfen. Das Reaktionsgemisch wird weiter erwärmt und 1 Stunde bei 115-120°C gehalten. Nach dem Erkalten auf 20°C wird das kristallin ausgefallene Azofarbstoffcarbonsäurechlorid durch Filtration isoliert, mit wenig kaltem o-Dichlorbenzol, dann mit Petrolether nachgewaschen und im Vakuumschrank bei 70°C getrocknet.

b) 7,6 g des gemäss a) erhaltenen Azofarbstoffcarbonsäurechlorids werden mit 60 g o-Dichlorbenzol unter Rühren auf 110°C erwärmt. Nun gibt man im Verlauf von 2-3 Minuten eine 110°C warme Lösung von Diaminen enthaltend 0,11 g p-Phenylendiamin, 0,11 g 2-Chlor-p-phenylendiamin und 1,42 g 1,4-Diamino-2,5-dichlorbenzol in 25 g o-Dichlorbenzol zu. Das ausgefallene Pigment wird 2 Stunden bei 140-145°C gerührt. Die Pigmentsuspension wird dann unter Rühren auf Raumtemperatur abgekühlt und anschliessend mit 200 g 60°C warmem Methanol versetzt. Man erhitzt das Gemisch auf 60°C und filtriert dann bei dieser Temperatur. Der Rückstand wird mit warmem Methanol und danach mit Wasser gewaschen. Durch Trocknen im Vakuumschrank bei 60°C erhält man 8,1 g eines Disazopigmentgemisches bestehend aus 10 Mol% C.I. Pigment Rot 166, 10 Mol% C.I. Pigment Rot 144 und 80 Mol% C.I. Pigment Rot 214, welches sowohl gegenüber den Einzelkomponenten als auch gegenüber einer entsprechenden physikalischen Mischung eine überraschend höhere Farbstärke und Sättigung zeigt.

Beispiel 2: Man verfährt wie in Beispiel 1b), mit der einzigen Ausnahme, dass anstelle eines Diamingemisches aus 0,11 g p-Phenylendiamin, 0,11 g 2-Chlor-p-phenylendiamin und 1,42 g 1,4-Diamino-2,5-dichlorbenzol ein Diamingemisch aus 0,14 g 2-Chlor-p-phenylendiamin und 1,59 g 1,4-Diamino-2,5-dichlorbenzol eingesetzt wird. Man erhält 6,8 g eines Disazopigmentgemisches bestehend aus 10 Mol% C.I. Pigment Rot 144 und 90 Mol% C.I. Pigment Rot 214, welches sowohl gegenüber den Einzelkomponenten als auch gegenüber einer entsprechenden physikalischen Mischung eine überraschend höhere Farbstärke und Sättigung zeigt.

Beispiel 3: Man verfährt wie in Beispiel 1b), mit der einzigen Ausnahme, dass anstelle eines Diamingemisches aus 0,11 g p-Phenylendiamin, 0,11 g 2-Chlor-p-phenylendiamin und 1,42 g 1,4-Diamino-2,5-dichlorbenzol ein Diamingemisch aus 0,36 g 2-Chlor-p-phenylendiamin und 1,32 g 1,4-Diamino-2,5-dichlorbenzol eingesetzt wird. Man erhält 7,6 g eines Disazopigmentgemisches bestehend aus 25 Mol% C.I. Pigment Rot 144 und 75 Mol% C.I. Pigment Rot 214, welches sowohl gegenüber den Einzelkomponenten als auch gegenüber einer entsprechenden physikalischen Mischung eine überraschend höhere Farbstärke und Sättigung zeigt.

Beispiel 4: Man verfährt wie in Beispiel 1b), mit der einzigen Ausnahme, dass anstelle eines Diamingemisches aus 0,11 g p-Phenylendiamin, 0,11 g 2-Chlor-p-phenylendiamin und 1,42 g 1,4-Diamino-2,5-dichlorbenzol ein Diamingemisch aus 0,27 g p-Phenylendiamin, 0,36 g 2-Chlor-p-phenylendiamin und 0,89 g 1,4-Diamino-2,5-dichlorbenzol eingesetzt wird. Man erhält 7,8 g eines Disazopigmentgemisches bestehend aus 25 Mol% C.I. Pigment Rot 166, 25 Mol% C.I. Pigment Rot 144 und 50 Mol% C.I. Pigment Rot 214, welches sowohl gegenüber den Einzelkomponenten als auch gegenüber einer entsprechenden physikalischen Mischung eine überraschend höhere Farbstärke und Sättigung zeigt. Bei diesem Produkt handelt es sich um eine feste Lösung deren Röntgenbeugungsdiagramm sich vom Röntgenbeugungsdiagramm der Einzelkomponenten und der entsprechenden physikalischen Mischung der Einzelkomponenten unterscheidet.

Beispiel 5: Man verfährt wie in Beispiel 1b), mit der einzigen Ausnahme, dass anstelle eines Diamingemisches aus 0,11 g p-Phenylendiamin, 0,11 g 2-Chlor-p-phenylendiamin und 1,42 g 1,4-Diamino-2,5-dichlorbenzol ein Diamingemisch aus 0,72 g 2-Chlor-p-phenylendiamin und 0,89 g 1,4-Diamino-2,5-dichlorbenzol eingesetzt wird. Man erhält 8,1 g eines Disazopigmentgemisches bestehend aus 50 Mol% C.I. Pigment Rot 144 und 50 Mol% C.I. Pigment Rot 214 welches sowohl gegenüber den Einzelkomponenten als auch gegenüber einer entsprechenden physikalischen Mischung eine überraschend höhere Farbstärke und Sättigung zeigt.

Beispiel 6: 0,04 g eines Disazopigmentgemisches von Beispiel 1 werden mit 13,3 g Polyvinylchlorid (PVC EVIPOL® SH 7020, EVC GmbH, Frankfurt a.M.), 1 g TiO₂ und 7,3 ml einer Grundmischung bestehend aus
- 92,21 Gew.%: Diisodecylphthalat (VESTINOL® , Hüls Chemie)
- 4,19 Gew.%: epoxidiertes Sojabohnenöl (RHEOPLAST® 39, CIBA-GEIGY AG) und
- 3,60 Gew.%: Hitzestabilisator auf Barium-Zinkcarboxylat-Basis (IRGASTAB® BZ 561, CIBA-GEIGY AG)
vermischt.

Nach einer Benetzungszeit von 30 Minuten wird die Mischung auf einem Walzenstuhl während 8 Minuten bei einer Walzentemperatur von 165°C zu einer dünnen farbstarken roten Folie verarbeitet.

Beispiel 7: 400 g Polypropylengranulat (DAPLEN® PT-55, Chemie LINZ) und 4 g des nach Beispiel 4 erhaltenen Pigments werden in einer Mischtrommel intensiv vermischt. Das so behandelte Granulat wird bei 260°-285°C nach dem Schmelzspinnverfahren versponnen. Man erhält rot gefärbte Fasern mit sehr guten textilen Eigenschaften, wie z.B. Licht- und Nassbeständigkeit sowie ausgezeichneter Farbstärke und Farbtonreinheit.

## Patentansprüche

1. Verfahren zur Herstellung von Disazopigmentgemischen, **dadurch gekennzeichnet, dass** 2 Mol eines Azocarbonsäurechlorids der Formel 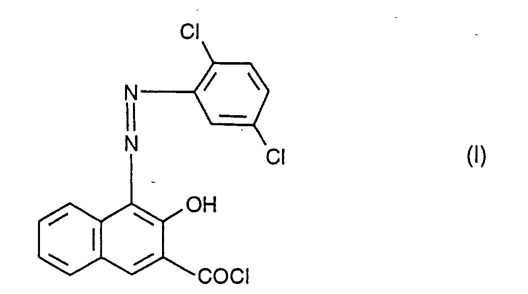 mit 1 Mol eines Gemisches von Diaminen der Formeln 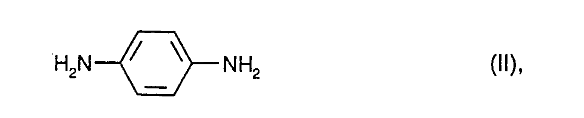 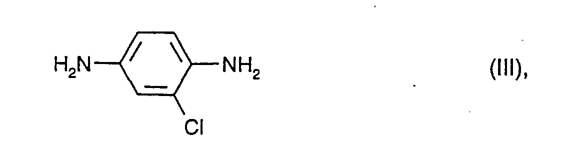 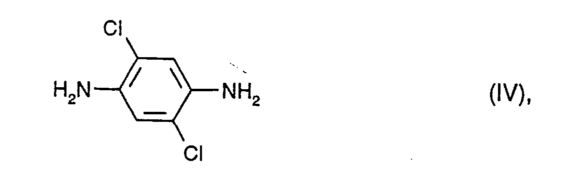 im Molverhältnis
II : III : IV von 0-30 : 5-60 : 40:95 kondensiert werden, wobei die Kondensation und die Isolierung des erhaltenen Produktes nach allgemein üblichen Methoden erfolgt.

2. Verfahren gemäss Anspruch 1, **dadurch gekennzeichnet, dass** ein Diamingemisch im Molverhältnis
II : III : IV von 0-25 : 5-50 : 50-90 verwendet wird.

3. Verfahren gemäss Anspruch 1, **dadurch gekennzeichnet, dass** ein Diamingemisch im Molverhältnis
II : III : IV von 5-15 : 8-30 : 70-87 verwendet wird.

4. Verfahren gemäss Anspruch 1, **dadurch gekennzeichnet, dass** ein Diamingemisch im Molverhältnis
II : III : IV von 10 :10 : 80. verwendet wird.

5. Feste Lösung bestehend aus den Disazopigmenten der Formeln 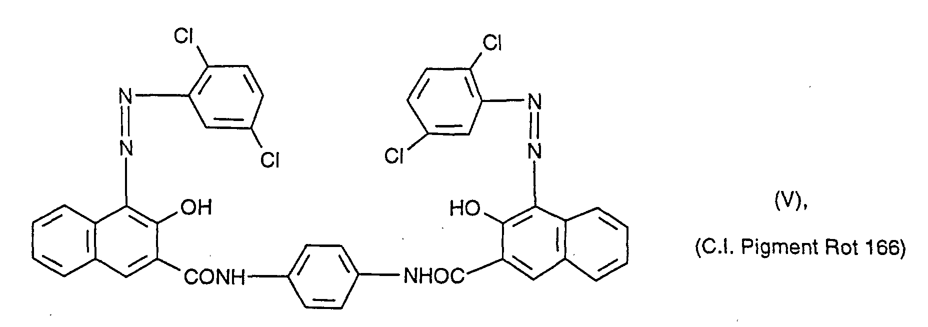 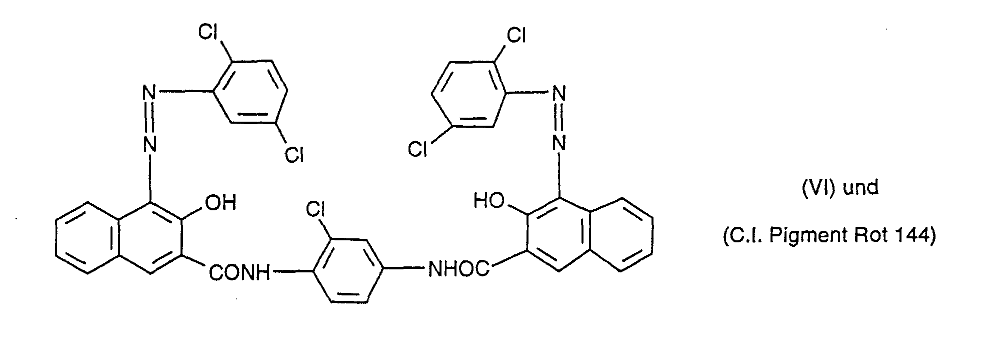 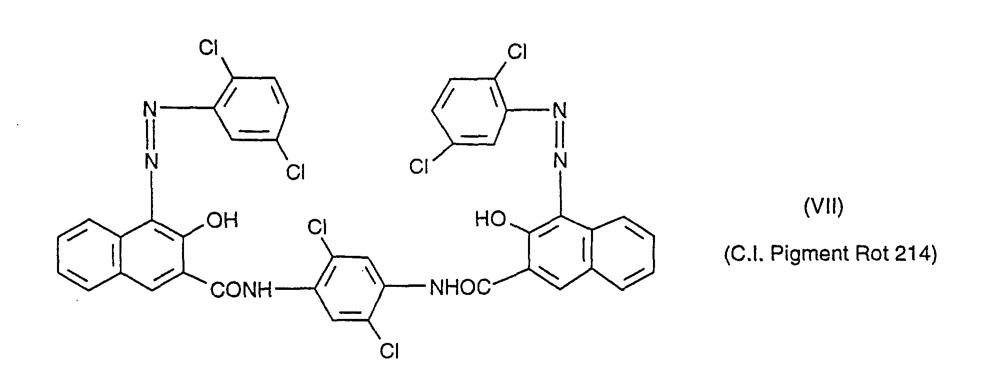 im Molverhältnis V : VI : VII von 25 : 25 : 50.

6. Mit einem nach dem Verfahren gemäss Anspruch 1 erhaltenen Disazopigmentgemisch pigmentiertes hochmolekulares organisches Material.

7. Hochmolekulares organische Material gemäss Anspruch 6, **dadurch gekennzeichnet, dass** es sich um Polypropylenfasern handelt.

8. Mit einer festen Lösung gemäss Anspruch 5 pigmentiertes hochmolekulares organisches Material.

9. Hochmolekulares organisches Material gemäss Anspruch 8, **dadurch gekennzeichnet, dass** es sich um Polypropylenfasern handelt.

## Claims

1. A process for the preparation of a disazo pigment mixture, which comprises condensing 2 mol of an azocarboxylic chloride of formula 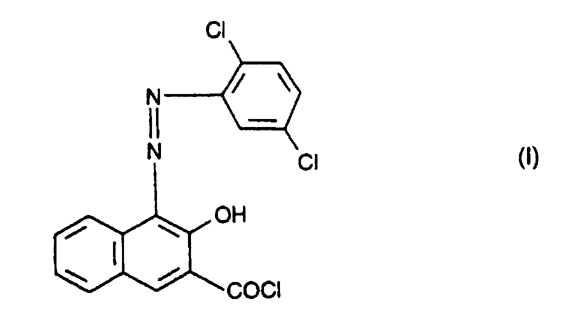 with 1 mol of a mixture of diamines of formulae 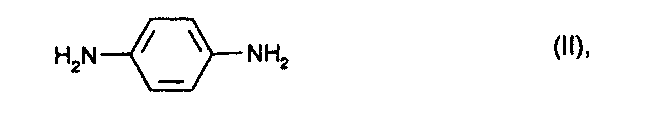 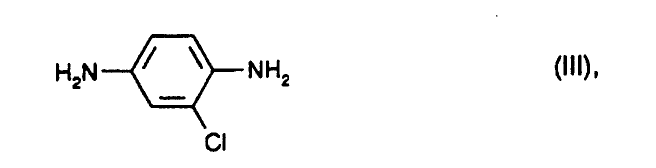 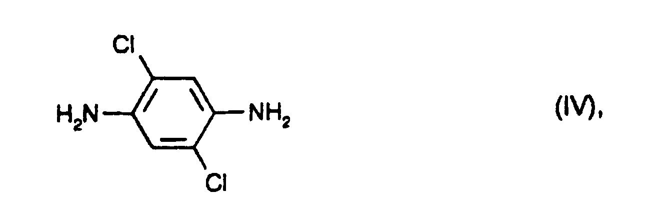 in a molar ratio of
II : III : IV of 0-30 : 5-60 : 40-95,
the condensation and isolation of the product obtained being carried out by customary methods.

2. A process according to claim 1, which comprises using a diamine mixture in a molar ratio of
II : III : IV of 0-25 : 5-50 : 50-90.

3. A process according to claim 1, which comprises using a diamine mixture in a molar ratio of
II : III : IV of 5-15 : 8-30 : 70-87.

4. A process according to claim 1, which comprises using a diamine mixture in a molar ratio of
II : III : IV of 10 : 10 : 80.

5. A solid solution consisting of the disazo pigments of formulae 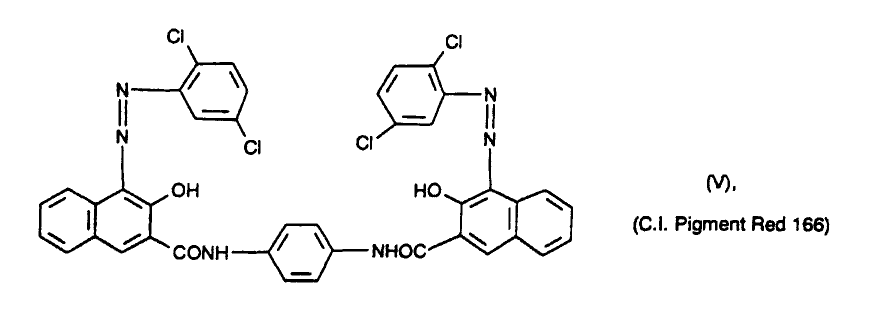 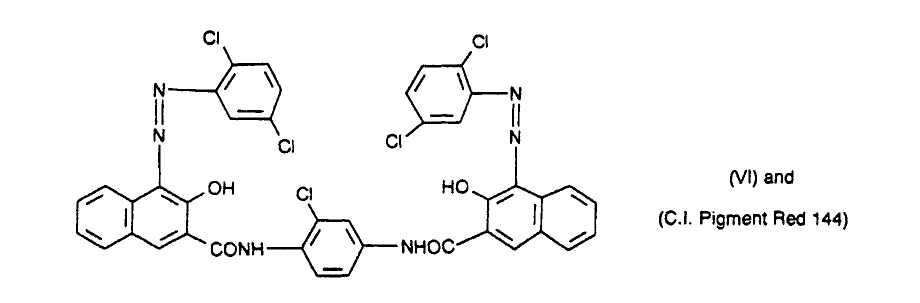 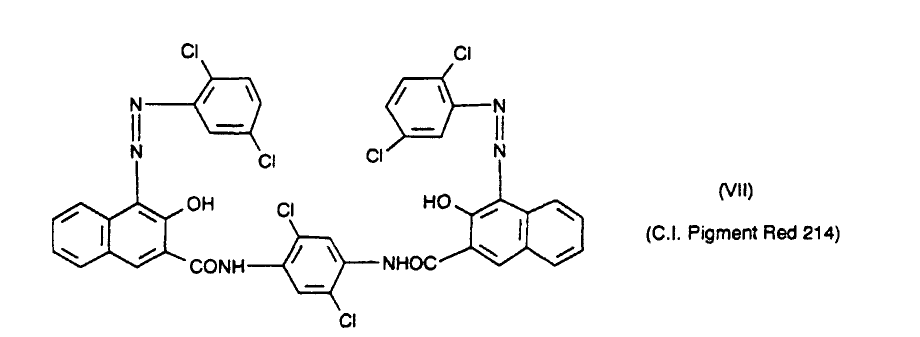 in a molar ratio of V : VI : VII of 25 : 25 : 50.

6. A high molecular weight organic material pigmented with a disazo pigment mixture obtained by the process of claim 1.

7. A high molecular weight organic material according to claim 6, which comprises polypropylene fibres.

8. A high molecular weight organic material pigmented with a solid solution according to claim 5.

9. A high molecular weight organic material according to claim 8, which comprises polypropylene fibres.

## Revendications

1. Procédé pour la préparation de mélanges de pigments diazoïques, **caractérisé en ce qu'**on condense 2 mol d'un chlorure d'acide azocarboxylique de formule 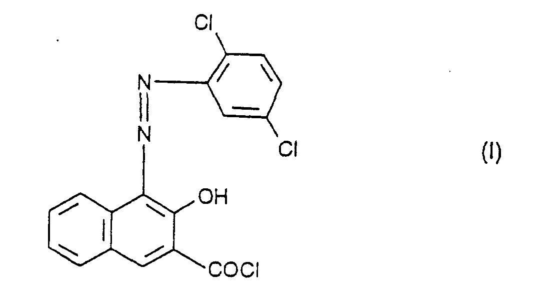 avec 1 mol d'un mélange de diamines des formules 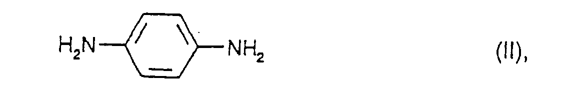 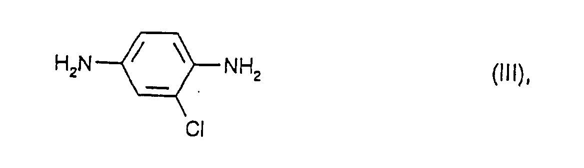 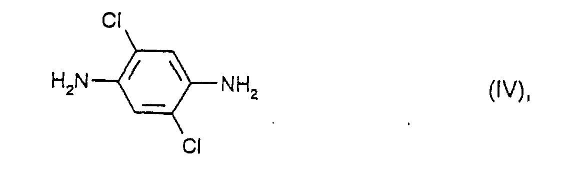 dans le rapport molaire
II : III : IV de 0-30 : 5-60 : 40-95,
en réalisant la condensation et la séparation du produit obtenu selon des procédés généralement usuels.

2. Procédé selon la revendication 1, **caractérisé en ce qu'**on utilise un mélange de diamines dans le rapport molaire
II : III : IV de 0-25 : 5-50 : 50-90.

3. Procédé selon la revendication 1, **caractérisé en ce qu'**on utilise un mélange de diamines dans le rapport molaire
II : III : IV de 5-15 : 8-30 : 70-87.

4. Procédé selon la revendication 1, **caractérisé en ce qu'**on utilise un mélange de diamines dans le rapport molaire
II : III : IV de 10 : 10 : 80.

5. Solution solide constituée des pigments diazoïques des formules
disazoiques des formules 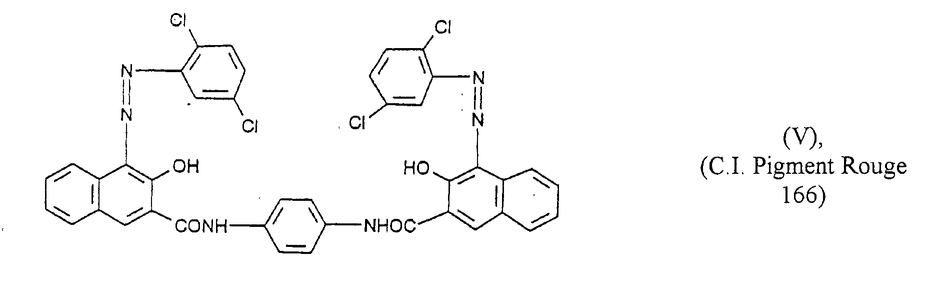 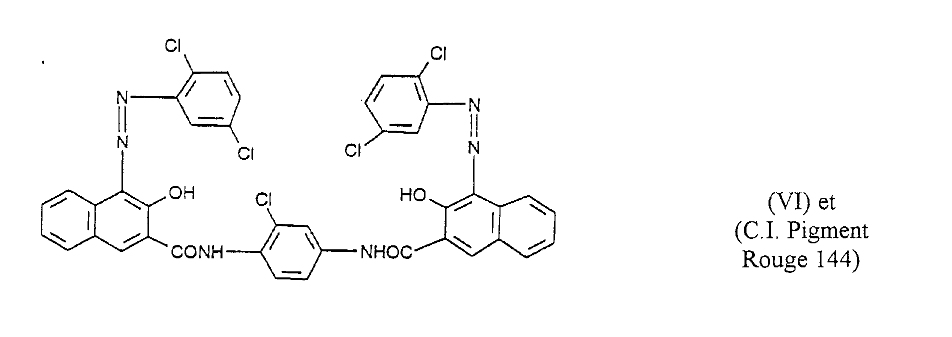 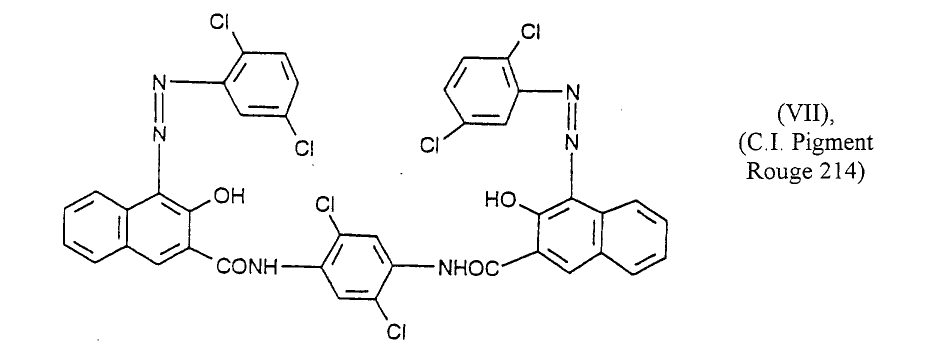 dans le rapport molaire V : VI : VII de 25 : 25 : 50.

6. Matériau organique de masse moléculaire élevée pigmenté avec un mélange de pigments diazoïques obtenus par le procédé selon la revendication 1.

7. Matériau organique de masse moléculaire élevée selon la revendication 6, **caractérisé en ce qu'**il s'agit de fibres de polypropylène.

8. Matériau organique de masse moléculaire élevée pigmenté avec une solution solide obtenue selon la revendication 5.

9. Matériau organique de masse moléculaire élevée selon la revendication 8, **caractérisé en ce qu'**il s'agit de fibres de polypropylène.
